# EUROPEAN PATENT SPECIFICATION

(11) **EP 1 481 791 B1**
(45) Date of publication and mention of the grant of the patent: **14.11.2007**
(21) Application number: 04102216.1
(22) Date of filing: 19.05.2004
(51) Int. Cl.: B29D 30/00, B29D 30/10, B29D 30/20

(54) **Method for manufacturing tires on a flexible manufacturing system**
Verfahren zur Reifenherstellung zur Verwendung in einem flexiblen Herstellungssystem.
Procédé de fabrication de pneumatiques à employer dans un système flexible de fabrication.

(30) Priority: 30.05.2003 US 449468
(43) Date of publication of application: 01.12.2004
(73) Proprietor: THE GOODYEAR TIRE & RUBBER COMPANY, Akron, Ohio 44316-0001 (US)
(72) Inventor: GIRARD, Jean-Claude, 44321, Copley (US); DELGADO, Andres Ignacio, 44256, Medina (US); RODIA, Ernest Joseph, 44321, Copley, OH (US)
(74) Representative: Kutsch, Bernd

(56) References cited:
- EP-A- 0 448 407
- EP-A- 0 875 364
- WO-A-01/32409
- WO-A-01/89818
- US-A- 4 504 919
- US-A- 6 139 668
- US-A1- 2002 189 744

## Description

### Field of the Invention

The present invention relates to a method of simultaneously producing production runs of tires on a multi-station sequential tire manufacturing system, according to the preamble of claim 1.

### Background of the Invention

It is known that in making vehicle tires that manufacture of a so-called carcass is first achieved by successively assembling several different components.

In other words, the different carcass types included in a production range can be distinguished from one another depending on the presence thereon of the various accessory components and/or the typology of the accessory components themselves.

By way of example, when carcasses for tubeless tires are to be produced, the main components include a so-called "inner liner" that is a layer of elastomeric air-impervious material, a carcass ply, a pair of annular metal elements, commonly referred to as bead cores, around which the opposite ends of the carcass ply are folded, as well as a pair of sidewalls made of elastomeric material, extending over the carcass ply at laterally opposite positions. The accessory components may in turn comprise of one or more additional carcass plies, one or more reinforcing bands for overlying the carcass ply or plies at the areas turned up around the bead cores (chafer strips), and others.

US-A-5,554,242 discloses a two stage tire building with a first stage tire building drum in combination with a second stage tire building drum. For this system, individual breaker application and single piece tread rubber are applied at the second stage while components such as apex chafers and shoulder wedges are applied at the first stage.

While the two-stage building process in its separate stages accommodated servers for the various components, it presented the problems of requiring a large work area for the two separate positions and the need to coordinate the separate functions as well as bringing all of the components together at the proper stations. As a result, the components were often stored and became subject to aging, sometimes losing their tack, for example, during the handling of the individually applied components. Moving the tire subassemblies from one stage to another has been a highly labor intensive operation even with the use of mechanical servers to assist operators in placing the components on the tire on the first and second stage drums. As a result, the operation was costly.

US-A-5,354,404 discloses a system for assembling green tires with a two-stage process where the assembly is automatic and requires a small amount of floor space. While this system, has overcome some floor space problems, its output is still limited.

Further, as disclosed in U.S. 5,354,404, there is illustrated another system for manufacturing tires on a line with a plurality of building drums "arranged in a train or series and a connecting means is provided for translating the cores from one device to the next." The connectivity between the tire building cores leads to the inability to change the machine to accommodate various sized tire constructions.

The problem with prior art manufacturing systems is that the location and position of the building drums is not precise enough to ensure that the tires being constructed are of adequate uniformity for the requirements of present day high performance tires. That is, while the tire building drums moving along the assembly path are stopped at a stop position at each work position, there is no teaching or suggestion of how the position of the tire building drum was positioned at a precise position. Further, it appears that the power to operate each building drum is carried aboard each drum. This would suggest that each drum is more complicated and expensive to produce.

It is well known that the components of most pneumatic tire constructions must be assembled in a way, which promotes good tire uniformity in order to provide proper tire performance. Tire uniformity is generally considered to mean tire dimensions and mass distributions which are uniform and symmetric radially, laterally, circumferentially, and meridionally, thereby producing acceptable results for measurements of tire uniformity including static and dynamic balance, and also including radial force variation, lateral force variation, and tangential force variation as measured on tire uniformity machines which run the tire under load on a road wheel.

Although certain degrees of tire non-uniformity can be corrected in post-assembly manufacturing (e.g. by grinding), and/or in use (e.g. applying balance weights to the rim of a tire/wheel assembly), it is preferable (and generally more efficient) to build-in tire uniformity as much as possible.

The prior art has problems of enabling the building of tires with complicated construction, such as runflat tires, to be built on a single manufacturing line that is capable of being easily changed to accommodate different constructions sizes.

EP-A-1 295 701 discloses a method for simultaneously building a plurality of tire carcasses. The method comprises the tire building steps of establishing a sequence of at least three and up to ten workstations; advancing at least three disconnected cylindrically shaped tire building drums along a working axis extending through the at least three workstations; and applying one or more tire components to the tire building drums at each of the workstations. Then the resulting flat built green tire carcass is removed at the last of the workstations. Finally, the tire building drum is advanced from the last workstation after the flat built green carcass has been removed to the first workstation. Thereafter, the belt and tread package is disposed about the cylindrical or flat built green tire carcass, expanding the tire carcass into a tread and belt to form a green tire.

A primary limitation of the method of EP-A-1 295 701 is believed to be the applying of the components for the carcass assembly on a flat building drum and then inflating said drum to a toroidal shape prior to applying the belt tread assembly.

Another primary limitation is the application of the tread belt assembly to the toroidially shaped carcass means. The green tire assembly must be inflated and further expanded to fit the internal surfaces of the mold cavity.

In essence the entire automated assembly resulted in a most conventional green tire carcass and belt assembly to result with all the inherent deficiencies in the manufacture flat tire building methods.

The present invention proposes a novel way to build a tire in a shape closely simulating a finished product while achieving high levels of automation and precision part placement.

Another objective of the present invention is to achieve the ability to change tire sizes in the line to permit a variety of sizes to be built simultaneously without disrupting the line for size changeovers. This capability enables tires to be built in an automated way in lot sizes as small as one tire.

US-A-2002/0189744 discloses a method of manufacturing tires according to the preamble of claim 1. Similar methods are shown in WO-A-01/89818, US-B-4,504,919 and WO-A-01/32409. Further methods to build tires are described in EP-A-0875 364, US-B-6,139, 668 and EP-A-0448 407.

### Summary of the Invention

The invention relates to a method of simultaneously producing production runs of tires on a multi-station sequential tire manufacturing system according to claim 1.

Particular embodiments of the invention are the subject of the dependent claims.

The step of forming a carcass preferably further includes placing or forming carcass components on the building drum at a plurality of workstations at predefined locations along a working axis and extending through the plurality of workstations, the building drum circumference being moved perpendicular to the working station along the working axis.

### Definitions

"Axial" and "axially" refers to directions that are on or are parallel to the tire's axis of rotation.

"Belt structure" or "reinforcement belts" or "belt package" refers to at least two annular layers or plies of parallel cords, woven or unwoven, underlying the tread, unanchored to the bead, and preferably having both left and right cord angles in the range from 18 to 30 degrees relative to the equatorial plane of the tire.

"Carcass" refers to the tire structure apart from the belt structure and the tread, but including the sidewall rubber, beads, plies, and, in the case of EMT or runflat tires, the wedge inserts sidewall reinforcements.

"Casing" refers to the carcass, belt structure, beads, and all other components of the tire excepting the tread and undertread.

"EMT tire" refers to Extended Mobility Technology and a tire that is designed to provide at least limited operational service under conditions when the tire has little to no inflation pressure.

"Lateral" refers to a direction parallel to the axial direction.

"Meridional profile" refers to a tire profile cut along a plane that includes the tire axis. "Ply" refers to a cord-reinforced carcass-reinforcing member (layer) of rubber-coated radially deployed or otherwise parallel cords.

"Tread cap" refers to the tread and the underlying material into which the tread pattern is molded.

### Brief Description of the Drawings

Reference will be made in detail to preferred embodiments of the invention, examples of which are illustrated in the accompanying drawing figures.

Figure 1 is a schematic view of an automated tire manufacturing system, according to the invention.

Figure 2A is a top view of an exemplary initial workstation of the automated tire manufacturing system showing a tire build drum coupled to an intake station, according to the invention.

Figure 2B is a plan view of the application of a tire component at the exemplary initial workstation.

Figures 3A, 3B, 3C are views of an intermediate exemplary workstation according to the invention.

Figures 4A-4E are views of the portable tire building drum according to the present invention.

Figure 5 is a perspective view of the tread belt assembly drum.

Figures 6 and 7 are a perspective view and an exploded view of the self-locking tire mold.

Figures 8A, 8B and 8C are cross-sectional views of the tread belt assembly being loaded into, closed on and collapsed inside the self-locking mold thereby transferring the tread belt assembly into the mold.

Figure 9 is a cross-sectional view of the carcass drum assembly and carcass shown installed into the mold and ready to be cured.

### Detailed Description of the Invention

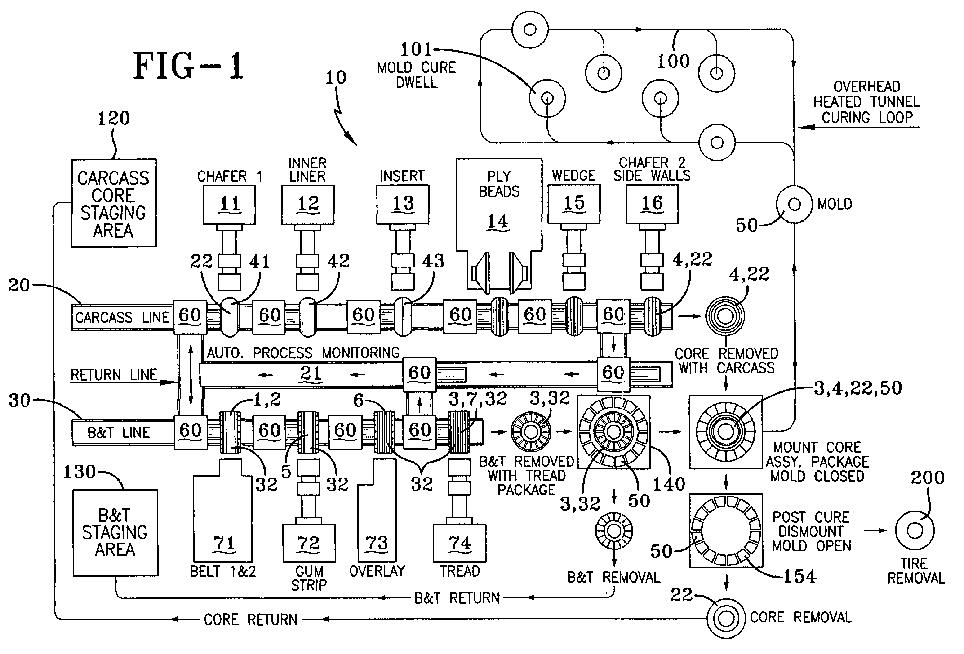

With reference to Fig. 1 a schematic view of an automated tire manufacturing system 10 according to the present invention is illustrated. This system 10 provides for the complete manufacture of pneumatic tires and provides two separate simultaneously operating first and second tire building lines, one line 20 forming the tire carcass subassembly 4, the other line 30 forming the tire belt tread subassembly 3. These two subassemblies 3, 4 will be combined into a tire curing mold 50 after their assembly is completed. When so joined at the tire building mold, the mold 50 will then be transferred into a mold curing loop 100 which permits the tires 200 to be cured, vulcanized and returned to be removed from the mold 50.

As shown the Figure 1 at the initial building of a tire there is a carcass core staging area 120. Each core represents a specific tire building drum assembly 22 designed to permit the fabrication of the tire carcass 4 onto the toroidally expanded building drum assembly 22 so when the tire carcass 4 is formed it is in the toroidal shape very close to the finished tire dimensions as it is assembled. This carcass core staging area 120 has pluralities of building drums 22 of specific tire sizes available so that the system 10 can provide the proper number of building drums 22 for the proper tire sizes. The building drums 22 are mounted having transporter devices called drum housing transporter housings 60. These housing transporters 60 accept the building drum 22 and will traverse along a line 20 as shown in Fig. 1. Each housing transporter 60 provides a means 62 for rotating the tire building drum 22 at each workstation as the specific tire component is being applied. The workstations (11, 12, 13, 14, 15, 16) and the tire housing transporters 60 have the software programmed into each of the workstations such that the proper component is provided to the tire building drum 22 at the precise time and location desired. As illustrated in the exemplary schematic of Figure 1 the initial workstation 11 applies a chafer in component 41 to the tire building drum and a second intermediate workstation 13 provides an innerliner 42. A third optional workstation 13 provides inserts 43, should runflat tires 200 are being manufactured.

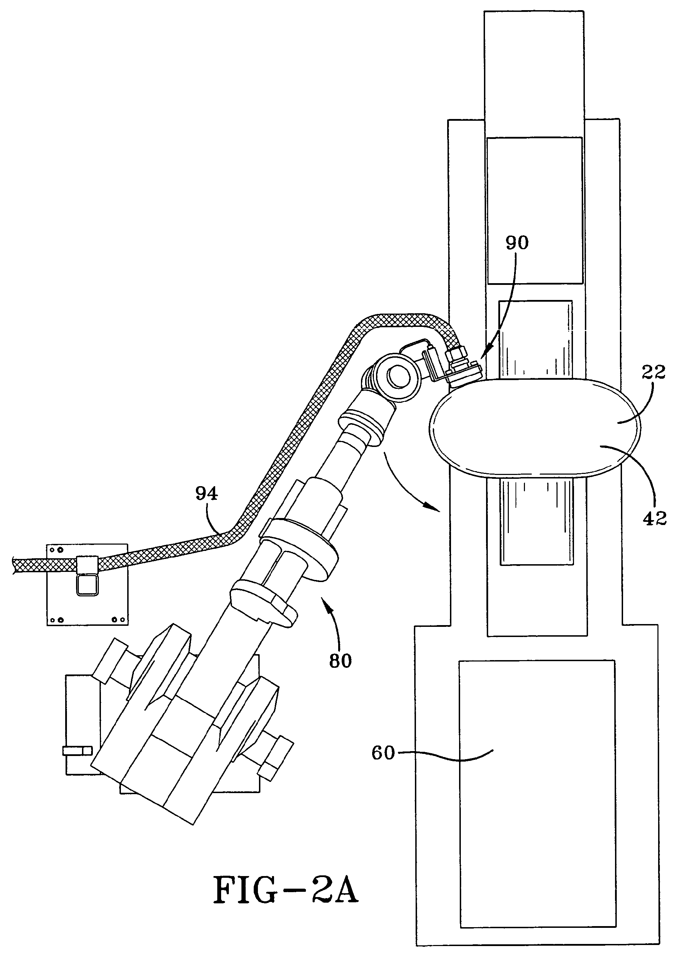

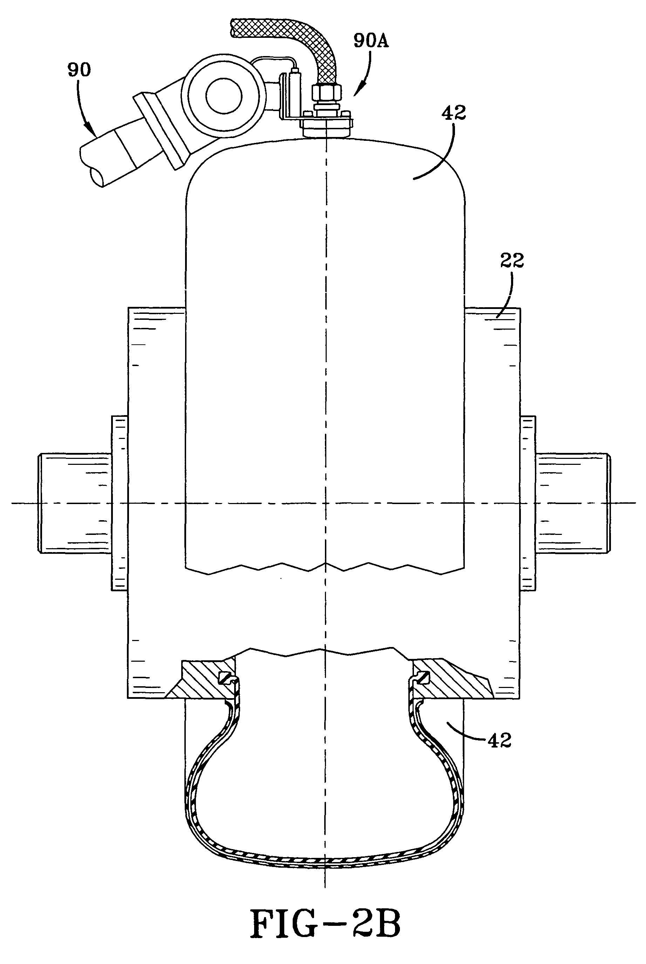

An example of one of the workstations 11, 12, 13, 15 or 16 applying a component is illustrated in Fig. 2A and 2B. Figure 2A shows a top view of the workstation. Figure 2A shows that workstation applying a tire innerliner 42. As illustrated, the robotic mechanisms smear or apply the liner 42 directly onto the tire building drum 22. As noted, if a chafer component 41 has been previously applied using a similar technique, the liner 42 will be applied directly over the chafer 41 as required by the tire building specification. If an insert 43 component is required or additional elastomeric components are applied, additional workstations can be provided to provide these features. These initial workstations apply the components onto a toroidally shaped building drum that is transported along the line as shown. Each tire building drum is positioned at an axis fundamentally perpendicular to the workstation and is transported directly in front of the workstation and stops at a precise location to permit the application of the tire components. While the elastomeric components are shown being applied and extruded directly onto and smeared onto the building drum and other underlying carcass components using a smearing die 90A at the end of a supplier hose 90 connected to a computer controlled robot 90, it is possible to apply these components using more conventional elastomeric strip application means by providing necessary server mechanisms and by supplying the components in layers onto the building drum 22, each component being cut and fed to length as commonly found in more conventional tire manufacturing systems. These systems, however, require additional complexity in tire building to accomplish the required splices and overlaps and therefore are not the best mode of practicing the present invention which contemplates using the smear technology as illustrated in Figs. 2A and 2B.

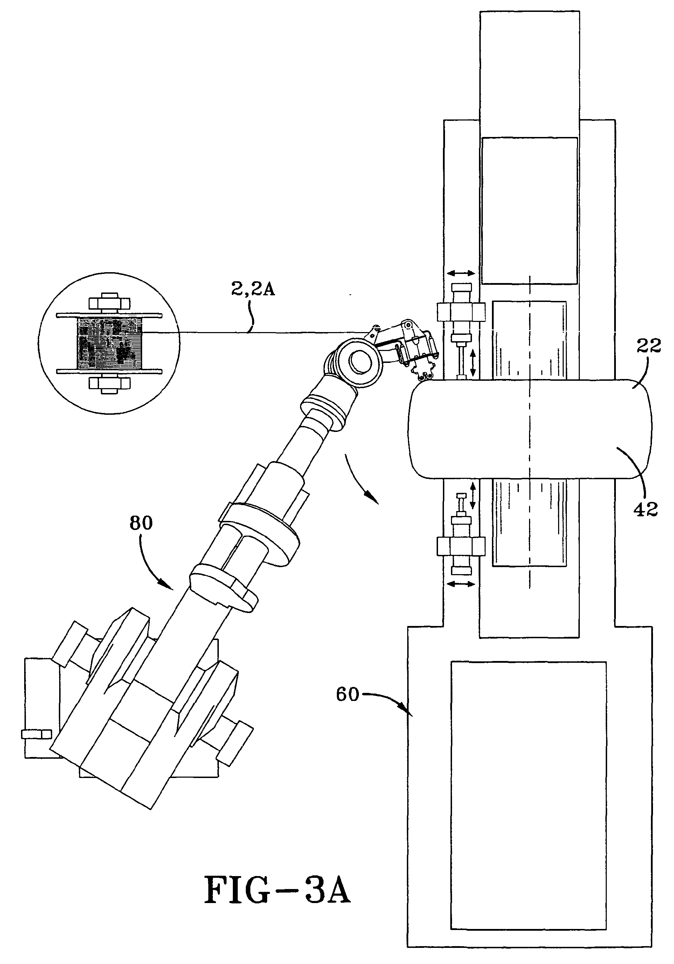

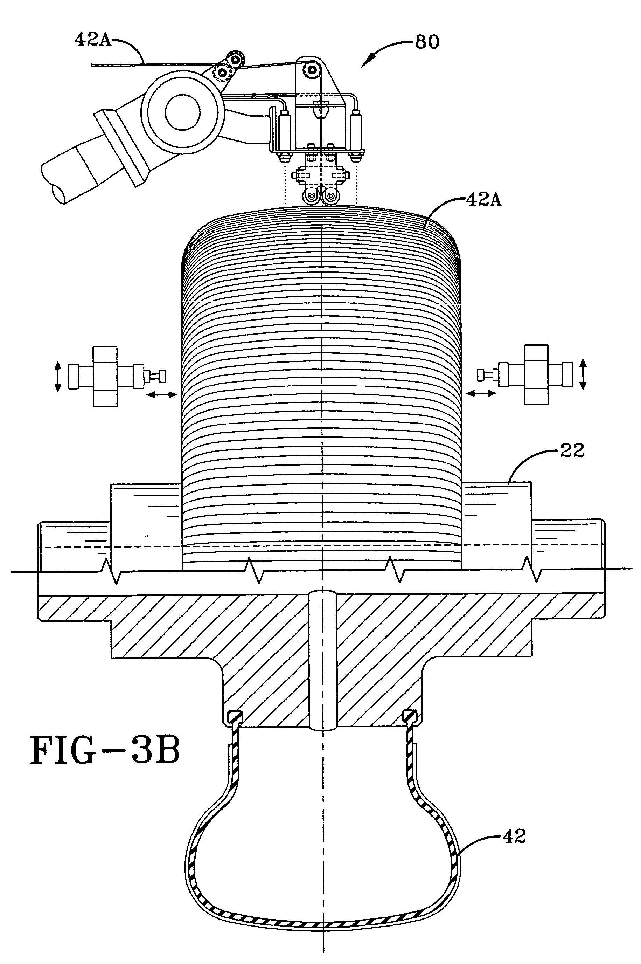

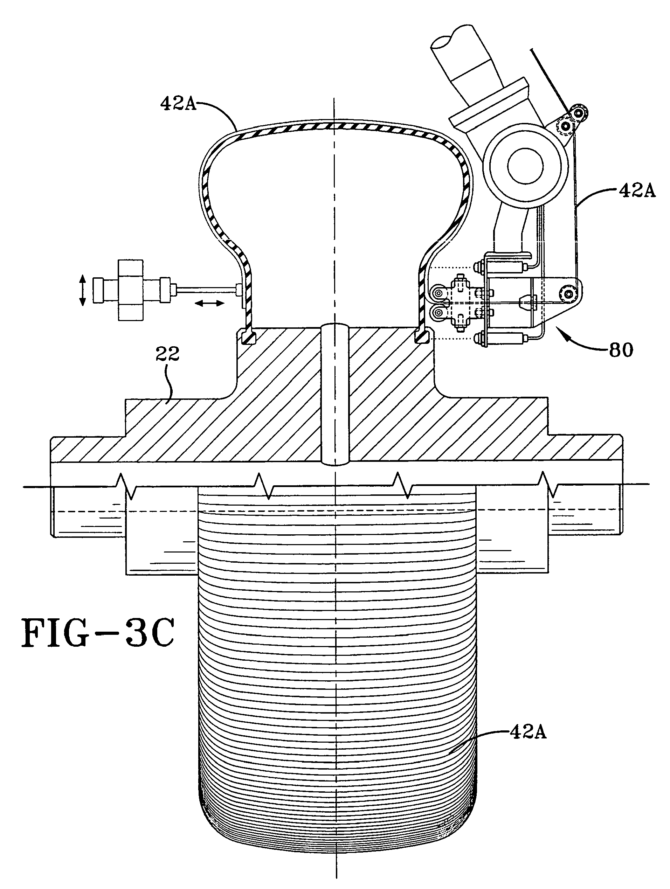

After the initial elastomeric components 11, 12 and 13 have been applied to the tire building drum assembly 22, the assembly is then transferred to the intermediate workstations 14 wherein the carcass ply 44 and beads 45 are applied to the building drum 22. These may be applied using conventional strips or laminate layers of ply 44 and preformed beads 22 or, alternatively, the ply 44 may be produced using a cord placement mechanism 80 as shown in Figs. 3A, 3B and 3C. In using this mechanism, the ply cords 42A are placed precisely onto the building drum with the previously applied carcass components and the ply paths are positioned very precisely onto the tire building drum in a very fast and accurate manner as illustrated. Once the ply cords 42A are positioned, an additional elastomeric layer may be applied over the ply cords 42A and the annular bead cores 45 can then be positioned onto the ply assembly.

The entire assembly 22 is then moved to the next building station or workstation 15 wherein wedges 47, additional chafers 48 and sidewall 49 components can be applied to the carcass subassembly using either the smearing application techniques previously discussed or by using elastomeric layers applied by more conventional means. After the sidewalls 49 and final elastomeric components are applied to the carcass assembly on the toroidally shaped building drum 22 the entire building drum assembly 22 with carcass 4 is removed from the housing transporter housing 60. The housing transporter then traverses laterally and then is moved back into starting station 11 of the system 10 to return to the next tire built whereupon it will receive a new building core 22 and be routed for an additional pass through the system 10 to build a second tire carcass 4.

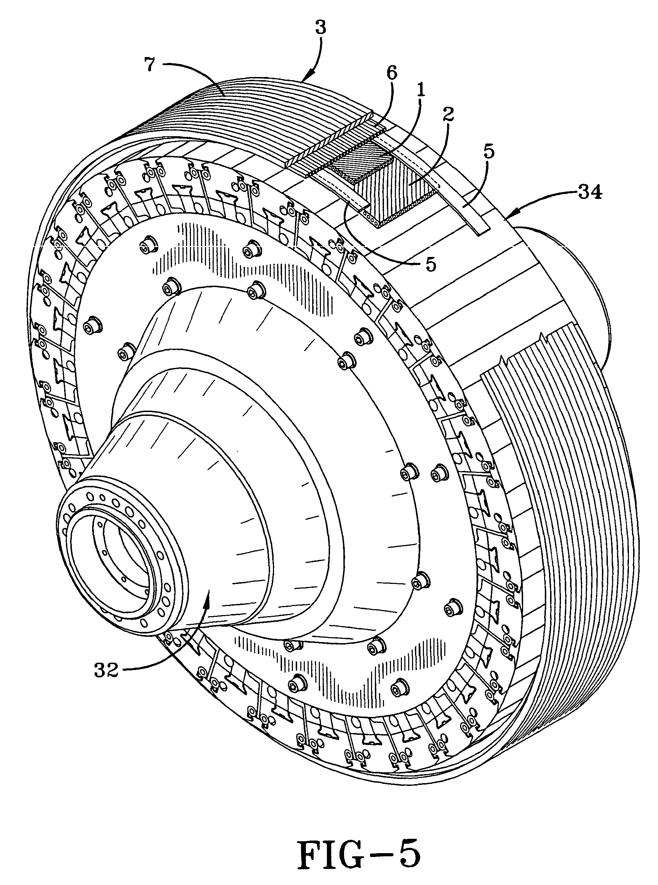

While this entire process of building the carcass 4 is being accomplished a simultaneous production of the tread belt assembly 3 is occurring. With reference to Figure 5, a tread belt 3 is shown on a radially collapsible and expandable tread building drum assembly 32. This tread building drum assembly 32, like the carcass building drum assembly 22, is attached to a housing transporter 60 mechanism and the tread belt drum assembly 32 is removably attached such that upon completion of fabrication of the tread belt assembly 3 it can be removed from the housing transporter housing 60. With the initial setup a housing transporter 60 unit receives a specific tread belt deck of a particular size for building a particular size or model.

The housing transporter 60 mechanism is programmed to build that particular tread belt. At the first workstation 71 the belt layers 1 and 2 are applied to the outer peripheral surface or deck 34 of the tread belt assembly building drum 32, as illustrated, and applied directly onto the deck surface 34. After the first wide belt 1 is applied and the second narrow belt 2 is applied, a gum strip 5 is applied to each edge of the first belt layer 1 at a second workstation 72 as illustrated in Figure 1. If required, an optional overlay workstation 73 is provided wherein overlays 6 having substantially 0° or very low angles in the circumferential direction are wound onto and over the underlying belt structure 1, 2. Once these components are laid onto the outer peripheral surface of the deck 34, the tread 7 is applied to the underlying components as illustrated. Once the tread is applied, as either an annular strip or as a spirally wound plurality of strips to form an unvulcanized tread component 7, this completes the tread belt reinforcing structure assembly 3. At this final workstation 74 the tread belt building drum 32 is removed from the housing transporter 60 and the housing transporter 60 is moved laterally up and along the rails 21 to repeat the process for the next tire tread belt building assembly, assuming that the same deck assembly is required. If a different deck assembly is required, the building drum belt and tread staging area 30 will be accessed and a specific building drum deck 34 will be provided by removing the initial building drum deck 34 and replacing it with a second building drum deck 34 of a different size as required.

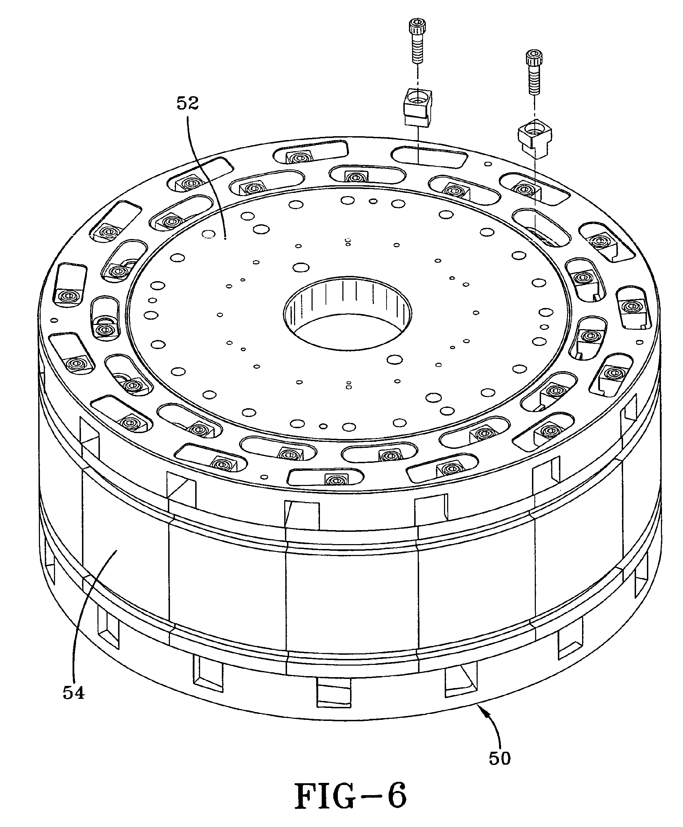

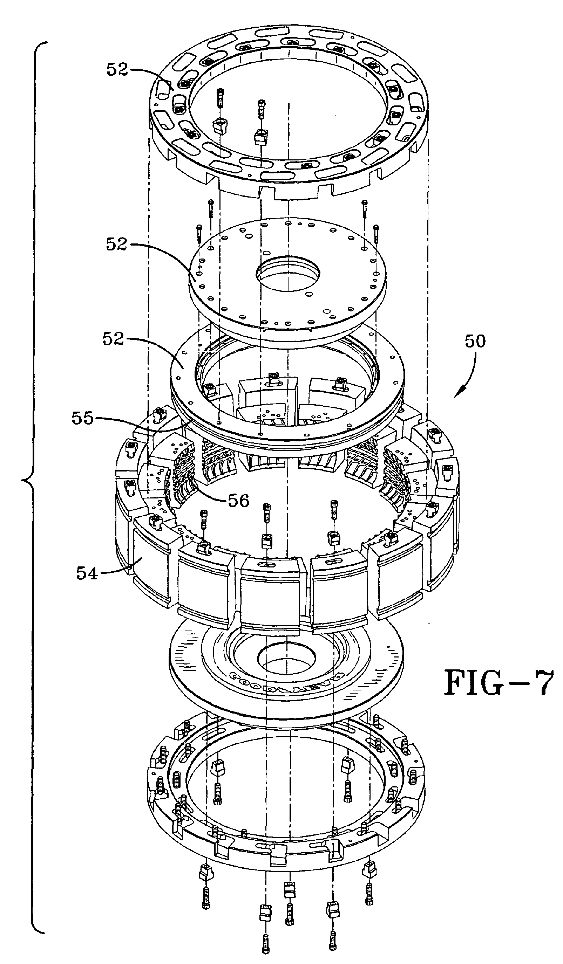

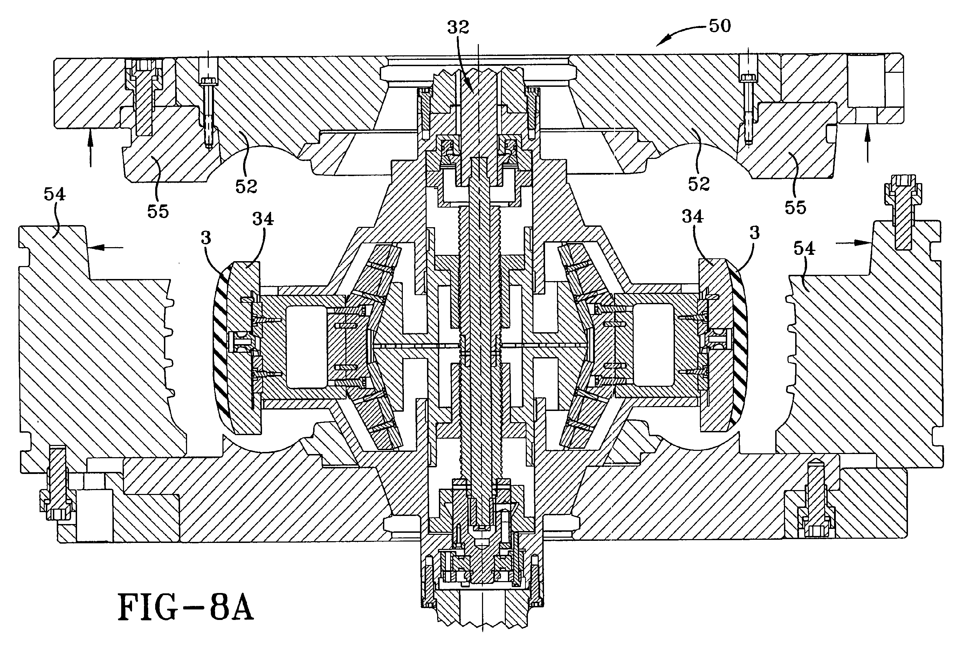

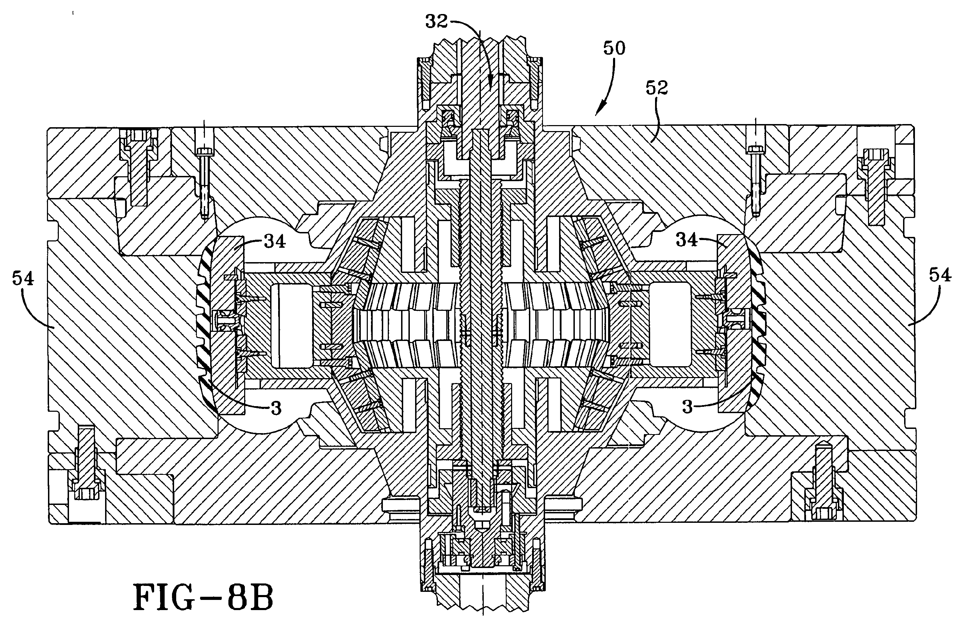

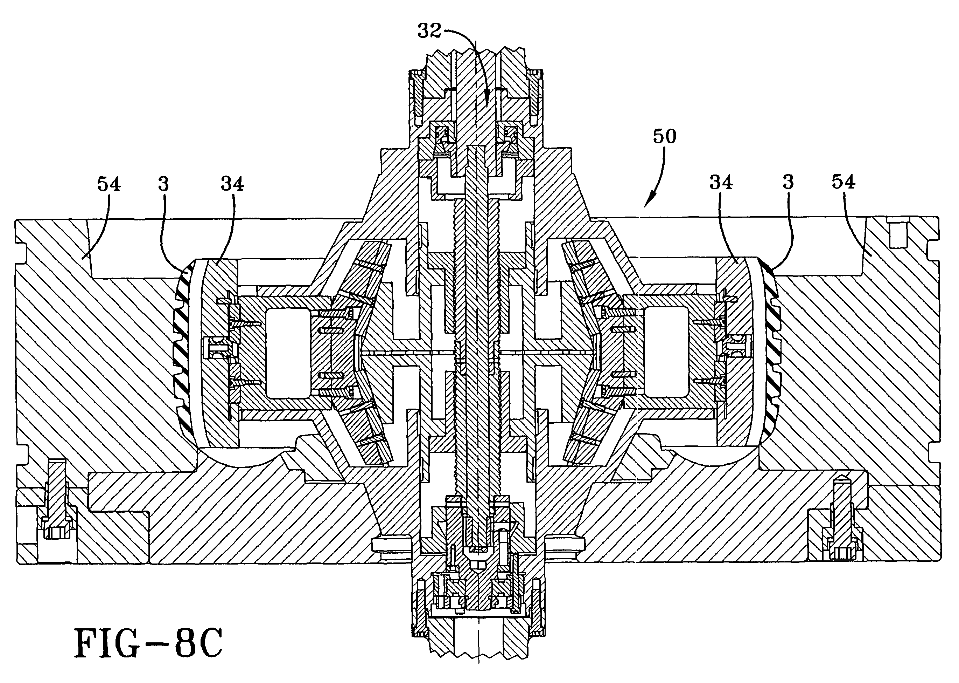

Once the tread belt assembly 3 is completely formed, the entire tread belt building drum 32 building drum with the tread belt reinforcing structure mounted to it is removed from the transporter housing 60 and delivered to an open segmented mold 50 at location 140 (see Figures 6 and 7). This mold 50 is shown in perspective view has a top plate 52 which is removed and the segments 54 are radially expanded to accept the tread belt drum 32 with the tread belt reinforcing structure 3 mounted to it. Once the tread belt 3 is inserted into the open mold 50 as illustrated in Figure 8A, the top plate 52 of the mold 50 is closed upon the tread building drum assembly 32 and the segments 52 are radially contracted inwardly compressing against the tread 7 as shown in Figure 8B. Once firmly engaged in the mold 50, the tread building drum 32 is collapsed, thereby transferring the tread belt reinforcing structure 3 to the internal surfaces 56 of the mold 50. Once collapsed, the top plate 52 is removed as illustrated in Figure 8C and the tread building drum 32 can be removed from the mold 50 and then transported back to the belt and tread staging area 130 as illustrated in Figure 1.

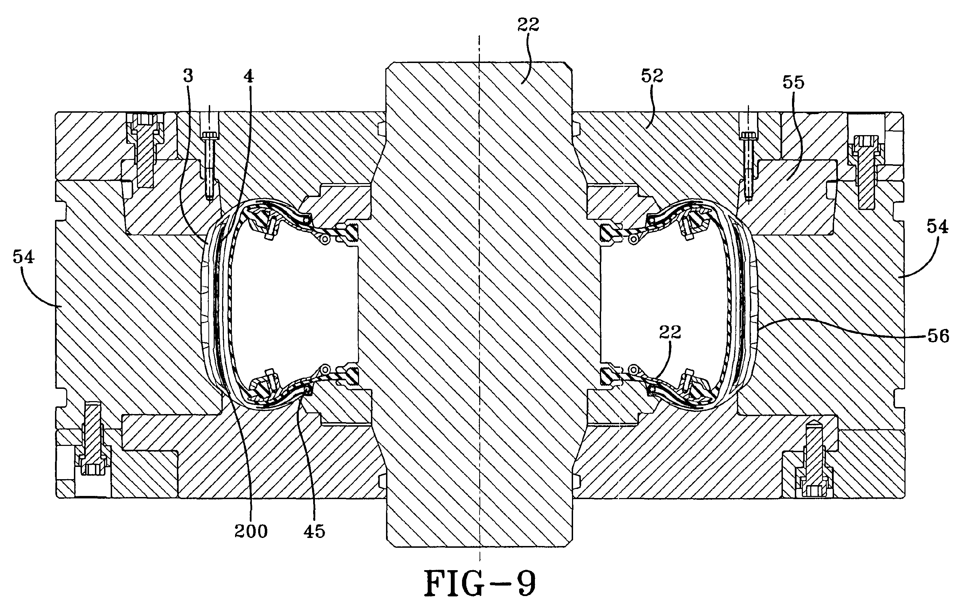

As shown in Figure 9, the carcass 4 and building drum assembly 22 now removed from housing transporter mechanism 60 can be inserted into the mold 50 and the housing transporter 60 is moved to an initial workstation 11 on the carcass core staging area 120 to receive the instructions for the next tire carcass assembly.

With the top plate 52 of the mold 50 open, the entire building drum assembly 22 with the carcass 4 mounted thereto can be inserted directly into the mold 50. This is made possible due to the fact that an upper portion 55 of the tread mold forming section of the mold is attached to the top plate 52. This permits the entire carcass 4 to be able to fit directly into the mold 50 with the tread belt assembly 3 already in place. Once inserted into the mold 50, the mold 50 can be closed and the carcass subassembly 4 inflated by applying internal pressure to the building drum assembly 22. Once this is accomplished the mold 50 can be heated and pressurized to curing mold temperatures and pressures and the mold 50 will then be transferred into an overhead heated tunnel curing loop 100 to finish the overall vulcanization of the tire 200 encased into the mold 50. In some curing cycles, the molds 50 may move to a holding position or a mold cure dwell 101 to achieve the required curing time. As the mold 50 traverses through the heating curing loop 100 it is rerouted back to a post cure mold opening and removal station 154 post cure. At this point, the mold is open, the mold segments are radially expanded and the building drum core 22 with the tire mounted thereto is removed from the mold 50.

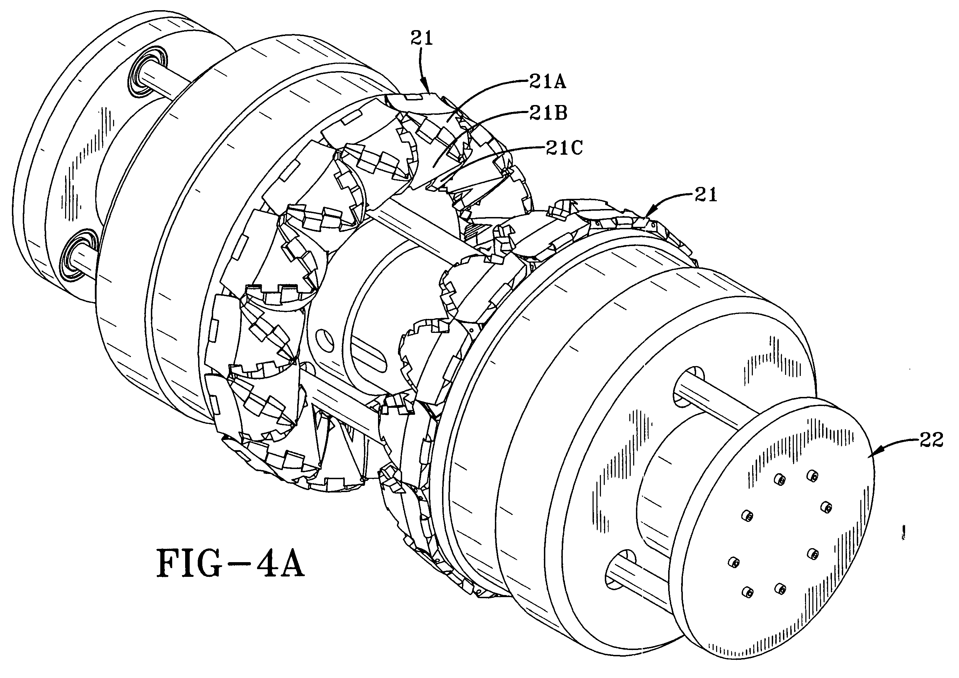

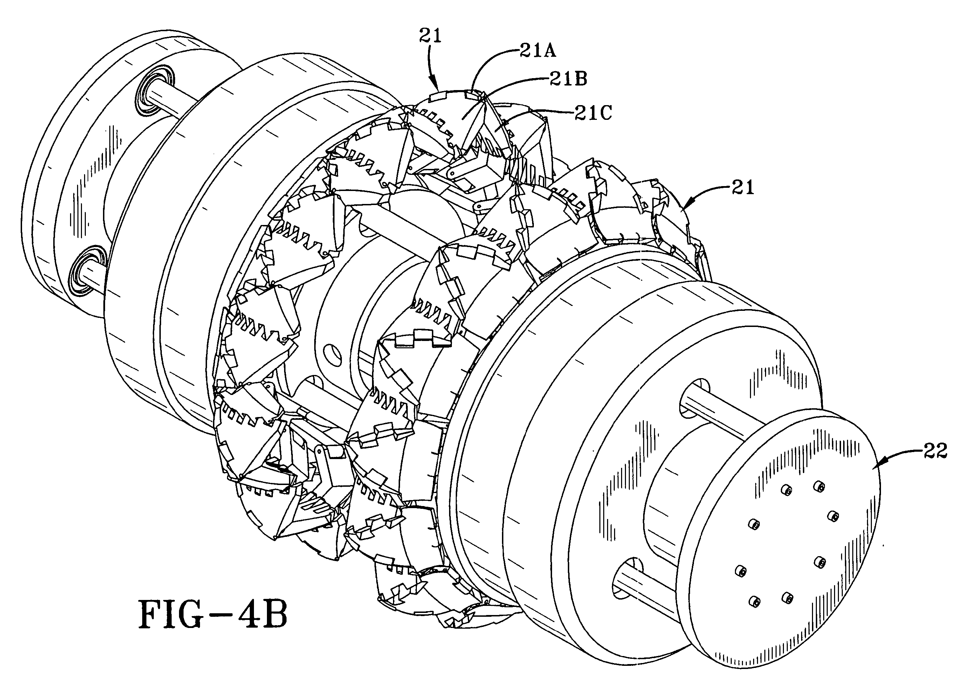

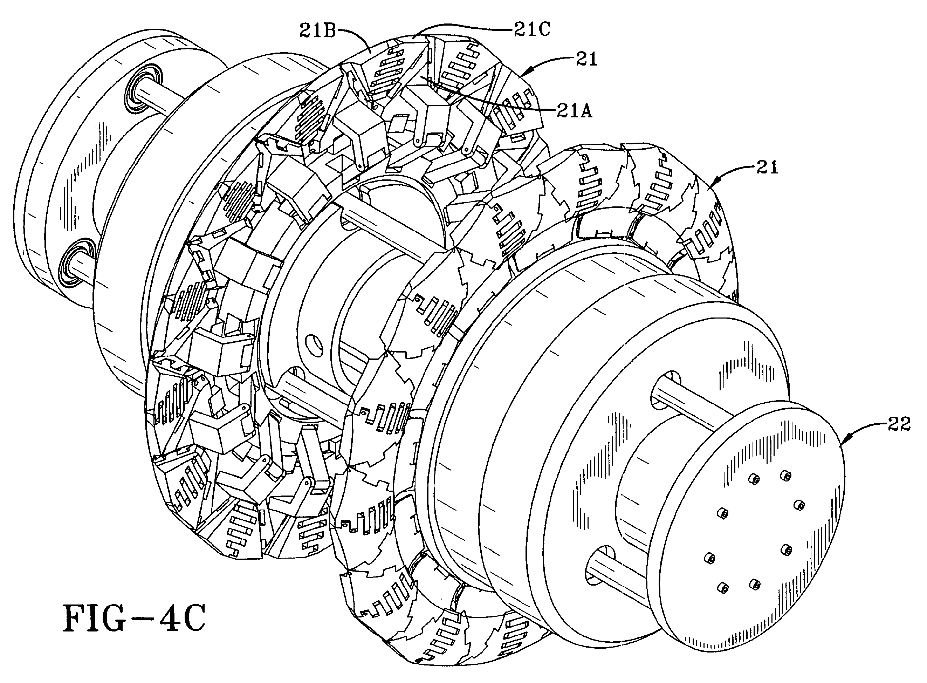

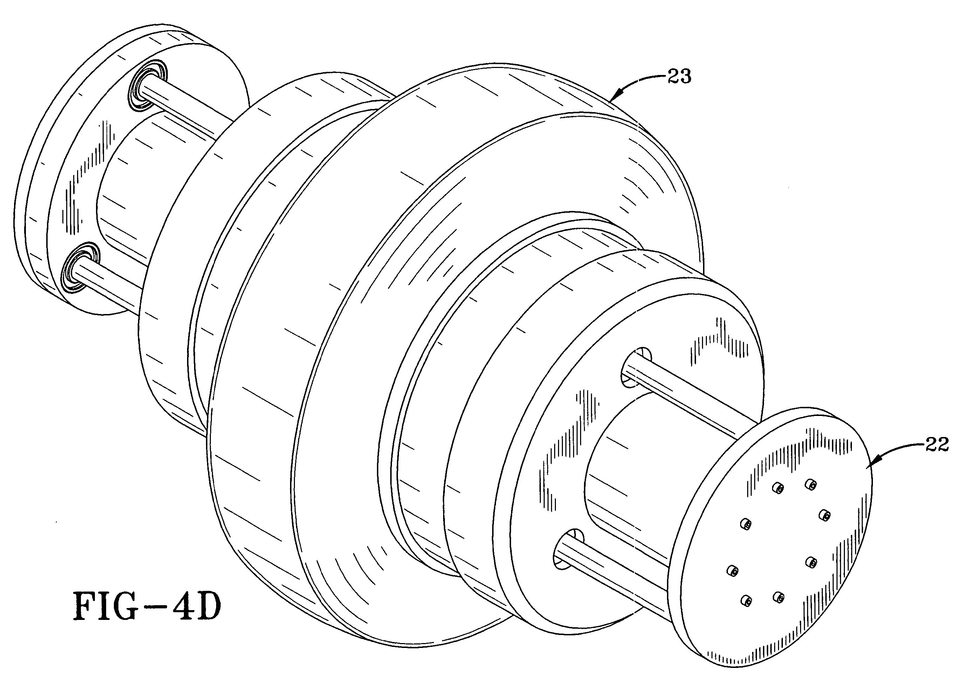

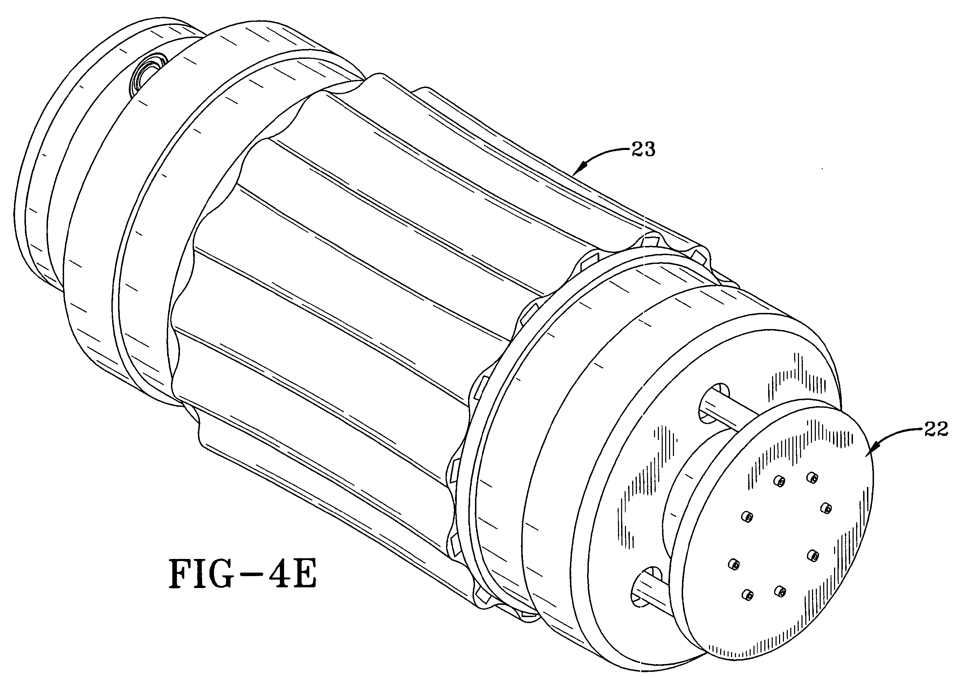

With reference to Figures 4A, 4B, 4C, 4D and 4E, for a better understanding of the invention it must be appreciated that the carcass building drum core 22 is radially expandable and collapsible. As illustrated in Fig. 4 internal mechanisms 21 can be folded radially inwardly as the building drum 22 is expanded axially outwardly. As the building drum is moved axially inwardly at both ends, the sidewall support mechanisms shown as interlocking triangles 21A, 21B,21C move radially outwardly until in a fully closed position these mechanisms 21A, 21B and 21C are almost fully radially extending as illustrated in Figure 4C. The result is that during the tire building an elastomeric cover 23 which is also partially reinforced at least in the crown area is mounted over these sidewall supporting structures 21 as shown in Figure 4D. This creates a generally rigid building surface upon which all the carcass components can be fabricated. The building drum 22 being portable, as previously discussed, can be removed from housing the transporter 60 in this radially expanded condition and then can be transferred directly into the mold 50 for the curing as previously described. Once this is completed, however, the tire 200 must be removed and as is illustrated in Figure 4E this is done by simply expanding outwardly the axial ends which draws the sidewalls supports 21 down and the supporting elastomeric cover 23 can be radially lowered such that the tire 200 can be removed from the tire building drum assembly 22,

Once this is accomplished, the tire building drum 22 can go back to the core staging area 120 upon which, if needed for a second tire build, it will be picked up by a housing transporter mechanism 60 or moved directly to a housing transporter mechanism 60 whereupon it will repeat the process for building a second tire carcass.

The automated system 10 as shown in Figure 1 permits the manufacture of tires in lot sizes as small as one tire to be produced while simultaneously producing other tire sizes at different workstations. The software package communicates to each workstation the amount of rubber and the type of component required for that specific tire build. As the building drums 22, 32 progress in front of the workstation the appropriate material at the appropriate location is applied, either to the carcass drum building assembly 22 or to the tread belt building drum assembly 32. All these functions are occurring simultaneously on two separate lines 20, 30. These components, once formed, create a complete tire carcass 4 and a separate but complete tread belt reinforcing structure 3.

An advantage of the present invention over prior art invention is that that tread belt subassembly 3 is then inserted directly into a mold 50 whereupon the mold 50 is closed upon the tread belt assembly 3 in such a fashion that it is transferred directly into the mold 50. The unique self-locking mold 50 then is opened to permit the removal of the tread belt drum assembly 32 as previously discussed and the entire carcass 4 that corresponds to the tread belt 3 for that particular tire size is then inserted into the mold 50 while mounted on its building drum 22. The mold 50 is then closed and routed for a curing process which may be done by either conventional steam methods, irradiation, electromagnetic fields, or otherwise. Once the curing loop 100 is completed, the mold 50 returns to a post cure dismount workstation 154 where the mold 50 is open and the building drum 22 is removed. This is all accomplished while other tires 200 are being continuously fabricated at the various workstations of the system 10.

As noted, this permits lot sizes from very small productions runs to be fabricated with great ease. It does require, however, that carcass core staging areas 120 provide multiple cores for building carcasses of various sizes that can be attached to the housing transporters 60. The core staging area 120 provides a ready supply of building drum cores for carcass manufacture and similarly the belt and tread staging area 130 provides an adequate supply of tread built building drums 32 for each specific tire required. What this means is a day's production of tires can be scheduled wherein a variety of lot sizes and tire specifications can be built without any downtime for tire size changeovers. Conventional high production, high volume tire lines require significant amount of downtime to replace both the molds and to reset all the building specifications for the different workstations at the tire building stations. It is particularly true in conventional first and second stage tire building systems. The present invention provides that such changeovers can occur with no downtime. While the embodiment of Figure 1 shows the exemplary tire building manufacturing process or system 10 that would commonly be applied for passenger and light truck tires, as well as aircraft, motorcycle and off-the-road tires, it must be appreciated that additional workstations can be provided and that these workstations can be used to add other components in the tire building manufacturing without jeopardizing the overall flexibility of tire building as previously discussed. It is understood that the additional components may be used or not used as the as the specific tire selected is being built. Oftentimes, many tires require components that are optional in other tires and therefore the builds may be different. The present invention permits this tire assembly to handle such variations and that the progression of the components through the line provides a rapid tire building capability.

One of the interesting differences of the present invention compared to prior art tire manufacturing is that it contemplates applying the components while hot onto the building drums and that while these hot components are freshly being produced at the carcass building and tread belt assembly workstations, they are then directly placed into a mold while hot, the mold is closed while all the components maintain their own heat from being formed and then are routed directly into a tire curing tunnel to be vulcanized. This has a tremendous advantage in that component materials can be provided that would otherwise bloom or cause a powdery substance called sulfur to leach out of the component prior to vulcanization. Historically, tires are made of strips and then stored. These strips set over a period of time and the material tends to bloom or have sulfur or other components leach out to the surface. This creates situations where the tires can have problems during manufacture due to the variations in freshness of the various components. The present invention ensures that the rubber materials are applied approximately as fresh as possible. In other words they are still warm when they are placed in the mold. There has been no opportunity for contamination to occur due to subassembly storage and handling. This greatly improves the manufacturing quality of the finished product and ensures that the components will be properly place and properly mixed at the time they are applied.

While the components are undoubtedly applied where formed creating a tremendous manufacturing advantage in terms of freshness, an additional advantage is that the component materials can be provided to each workstation in rather bulk form. The material can be made without the use of processing aides such as anti-aging ingredients and curing accelerators capable of surviving storage greatly reducing material cost. Furthermore, much of the component handling equipment commonly found in tire building can be eliminated. Therefore, inventory of intermediate components is reduced to a very low amount and in the case of the elastomer components the storage of intermediate articles is virtually eliminated.

## Claims

1. A method of simultaneously producing production runs of tires (200) on a multi-station sequential tire manufacturing system (10), the tires (200) being groups of tire types of different build specifications in lot sizes of one or more tires, wherein the method includes scheduling a production run by imputing a tire build software, wherein the software performs the steps of selecting tire building equipment and materials required for the respective tire type of a first build specification; calculating a corresponding number of cycles each piece of tire building equipment must perform to build a given lot; automatically changing to a second build specification at a lot change by switching to a second build specification after the last tire (200) of the first build specification passes; and repeating the automated changing to a next build specification as each last tire (200) of each prior lot passes until a final lot is produced; **characterized in that** the multi-station sequential tire manufacturing system includes a carcass building line (20) and a tread belt building line (30), each line (20, 30) being multi-stationed; wherein a carcass building in the carcass building line (20) and a tread belt building in the tread building line (30) for each tire occur concurrently, and wherein the carcass (4) built in the carcass building line (20) and the tread belt (3) built in the tread building line for a given tire (200) are assembled in a mold loading station (50) comprising a curing mold, the carcass (4) and the tread belt (3) are combined into.

2. The method of claim 1, wherein in the multi-station sequential tire manufacturing system (10) at least four stations (11-16) for carcass building are used, each station (11-16) being spaced at a predetermined distance.

3. The method of claim 1 or 2, wherein each building drum is moved along the working axis while attached to a drum transporter device, and wherein the drum transporter device preferably has a means for rotating the building drum about an axis rotation.

4. The method of at least one of the previous claims, wherein repeating the automated changing to a next build specification is done at each station as each last tire of each prior lot passes until a final lot is produced.

5. The method of claim 1, further comprising forming the carcass in the carcass building line (20) on a radially collapsible toroidally shaped carcass building drum; forming a tread belt in the tread belt building line (30) onto a radially collapsible tread belt building drum; placing the built tread belt into an open segmented mold; closing the mold segments compressing the tread into the mold face; collapsing the tread belt building drum and opening the mold top and removing the tread belt building drum; inserting the carcass into the mold while mounted onto the carcass building drum and then reclosing the mold; pressurizing the mold through the carcass building drum and expanding the carcass into the inner surface of the tread belt to form a tire assembly; curing the tire assembly; and removing the cured tire assembly from the mold.

6. The method of claim 5, wherein the step of forming the carcass further comprises placing carcass components on the carcass building drum at a plurality of workstations at predefined locations along a working axis extending through the plurality of workstations, the carcass building drum circumference being moved perpendicular to the working station.

7. The method of claim 1, wherein the curing mold with the carcass (4) and the tread belt (3) are transferred into a mold curing loop (100) which permits the tires (200) to be cured, vulcanized and returned to be removed from the curing mold.

## Patentansprüche

1. Verfahren zum gleichzeitigen Produzieren von Produktionsserien von Reifen (200) auf einem sequentiellen Mehrstations-Reifenherstellungssystem (10), wobei die Reifen (200) Gruppen von Reifentypen verschiedener Bauspezifikationen in Chargengrößen von einem oder mehr Reifen sind, wobei das Verfahren das Planen einer Produktionsserie durch Füttern einer Reifenbausoftware umfasst, wobei die Software die Schritte durchführt des Auswählens von Reifenbauausrüstung und Materialien, die für den jeweiligen Reifentyp einer ersten Bauspezifikation erforderlich sind ; Berechnens einer entsprechenden Anzahl von Zyklen, die jedes Stück Reifenbauausrüstung durchführen muss, um eine gegebene Charge zu bauen ; automatischen Wechselns zu einer zweiten Bauspezifikation bei einer Chargenänderung durch Umschalten zu einer zweiten Bauspezifikation, nachdem der letzte Reifen (200) der ersten Bauspezifikation durchgelaufen ist ; und Wiederholens des automatisierten Wechselns zu einer nächsten Bauspezifikation, wenn jeder letzte Reifen (200) jeder vorangehenden Charge durchläuft, bis eine letzte Charge produziert ist ; **dadurch gekennzeichnet, dass** das sequentielle Mehrstations-Reifenherstellungssystem eine Karkassenbaulinie (20) und eine Profilgürtelbaulinie (30) umfasst, wobei jede Linie (20, 30) mehrere Stationen aufweist ; wobei ein Karkassenbauvorgang in der Karkassenbaulinie (20) und ein Profilgürtelbauvorgang in der Laufflächenbaulinie (30) für jeden Reifen gleichzeitig vonstatten gehen, und wobei die in der Karkassenbaulinie (20) gebaute Karkasse (4) und der in der Laufflächenbaulinie gebaute Profilgürtel (3) für einen gegebenen Reifen (200) in einer Formwerkzeugladestation (50) zusammengebaut werden, die ein Vulkanisierformwerkzeug umfasst, worin die Karkasse (4) und der Profilgürtel (3) kombiniert werden.

2. Verfahren von Anspruch 1, wobei in dem sequentiellen Mehrstations-Reifenherstellungssystem (10) mindestens vier Stationen (11-16) zum Karkassenbau verwendet werden, wobei jede Station (11-16) in einem vorbestimmten Abstand beabstandet ist.

3. Verfahren von Anspruch 1 oder 2, wobei jede Bautrommel entlang der Arbeitsachse bewegt wird, während sie an einer Trommeltransportervorrichtung befestigt ist, und wobei die Trommeltransportervorrichtung bevorzugt ein Mittel zum Drehen der Bautrommel um eine Drehachse aufweist.

4. Verfahren von mindestens einem der vorigen Ansprüche, wobei das Wiederholen des automatisierten Wechselns zu einer nächsten Bauspezifikation an jeder Station vollzogen wird, wenn jeder letzte Reifen jeder vorangehenden Charge durchläuft, bis eine letzte Charge produziert ist.

5. Verfahren von Anspruch 1, weiter das Formen der Karkasse in der Karkassenbaulinie (20) an einer radial einklappbaren, kreisringförmigen Karkassenbautrommel umfassend ; Formen eines Profilgürtels in der Profilgürtelbaulinie (30) auf eine radial einklappbare Profilgürtelbautrommel, Plazieren des gebauten Profilgürtels in ein offenes segmentiertes Formwerkzeug ; Schließen der Formwerkzeugsegmente, wodurch die Lauffläche in die Formwerkzeugseite gedrückt wird ; Einklappen der Profilgürtelbautrommel und Öffnen der Formwerkzeugoberseite und Entfernen der Profilgürtelbautrommel ; Einbringen der Karkasse in das Formwerkzeug, während sie auf der Karkassenbautrommel montiert ist, und dann Wiederverschließen des Formwerkzeugs ; Druckbeaufschlagen des Formwerkzeugs durch die Karkassenbautromel und Aufweiten der Karkasse in die Innenfläche des Profilgürtels, um eine Reifenbaugruppe zu bilden ; Vulkanisieren der Reifenbaugruppe ; und Entfernen der vulkanisierten Reifenbaugruppe aus dem Formwerkzeug.

6. Verfahren von Anspruch 5, wobei der Schritt des Formens der Karkasse weiter das Plazieren von Karkassenbauteilen an der Karkassenbautrommel an einer Vielzahl von Arbeitsstationen an vordefinierten Standorten entlang einer Arbeitsachse, die sich durch die Vielzahl von Arbeitsstationen erstreckt, umfasst, wobei der Umfang der Karkassenbautrommel senkrecht zu der Arbeitsstation bewegt wird.

7. Verfahren von Anspruch 1, wobei das Vulkanisierformwerkzeug mit der Karkasse (4) und dem Profilgürtel (3) in eine Formwerkzeugvulkanisierschleife (100) übertragen werden, die gestattet, dass die Reifen (200) ausgehärtet, vulkanisiert und rückgeführt werden, um aus dem Vulkanisierformwerkzeug entfernt zu werden.

## Revendications

1. Procédé pour la fabrication simultanée de lots de production de bandages pneumatiques (200) sur un système séquentiel à postes multiples (10) de confection de bandages pneumatiques, les bandages pneumatiques (200) représentant des groupes de types de bandages pneumatiques possédant différentes spécifications de confection dans des tailles de lots d'un ou de plusieurs bandages pneumatiques, le procédé englobant la programmation d'un lot de production par l'entrée de données dans un programme de confection de bandage pneumatique, le programme mettant en oeuvre les étapes consistant à : sélectionner l'équipement et les matériaux de confection du bandage pneumatique, qui sont requis pour le type de bandage pneumatique respectif d'une première spécification de confection ; calculer un nombre de cycles correspondants auxquels doit être soumise chaque pièce de l'équipement de confection du bandage pneumatique pour la confection d'un lot donné ; passer de manière automatique à une deuxième spécification de confection lors d'un changement de lot par commutation à une deuxième spécification de confection après le passage du dernier bandage pneumatique (200) de la première spécification de confection ; et répéter le passage automatisé à une spécification de confection ultérieure lors du passage de chaque bandage pneumatique (200) de chaque lot antérieur jusqu'à ce que l'on obtienne la production d'un lot final : **caractérisé en ce que** le système séquentiel à postes multiples de confection de bandages pneumatiques englobe une ligne de confection de carcasse (20) et une ligne de confection de ceintures de bande de roulement (30), chaque ligne (20, 30) comportant plusieurs postes ; dans lequel une confection de carcasse dans la ligne de confection de carcasse (20) et une confection de ceinture de bande de roulement dans la ligne de confection de ceinture de bande de roulement (30) pour chaque bandage pneumatique a lieu de manière concourante ; et dans lequel la carcasse (4) confectionnée dans la ligne de confection de carcasse (20) et la ceinture de bande de roulement (3) confectionnée dans la ligne de confection de bande de roulement pour un bandage pneumatique donné (200) sont assemblées dans un poste de chargement de moule (50) comprenant un moule de vulcanisation, la carcasse (4) et la ceinture de bande de roulement (3) y étant combinées.

2. Procédé selon la revendication 1, dans lequel, dans le système séquentiel à postes multiples (10) de confection de bandages pneumatiques, on utilise au moins quatre postes (11-16) pour la confection de la carcasse, chaque poste (11-16) étant espacé l'un de l'autre sur une distance prédéterminée.

3. Procédé selon la revendication 1 ou 2, dans lequel chaque tambour de confection se déplace le long de l'axe de travail tout en étant fixé à un dispositif de transport de tambour, et dans lequel le dispositif de transport de tambour possède de préférence un moyen pour faire tourner le tambour de confection autour d'un axe de rotation.

4. Procédé selon au moins une des revendications précédentes, dans lequel la répétition du passage automatisé à une spécification de confection suivante a lieu à chaque poste après le passage de chaque dernier bandage pneumatique de chaque lot antérieur jusqu'à ce que l'on obtienne une production de lot final.

5. Procédé selon la revendication 1, comprenant en outre : la formation de la carcasse dans la ligne de confection de carcasse (20) sur un tambour de confection de carcasse de configuration toroïdale et apte à s'affaisser en direction radiale ; la formation d'une ceinture de bande de roulement dans la ligne de confection de ceinture de bande de roulement (30) sur un tambour de confection de ceinture de bande de roulement apte à s'affaisser en direction radiale ; le placement de la ceinture de bande de roulement confectionnée dans un moule ouvert à segments ; la fermeture des segments du moule pour comprimer la bande de roulement contre la face du moule ; l'affaissement du tambour de confection de ceinture de bande de roulement et l'ouverture du sommet du moule, ainsi que le retrait du tambour de confection de ceinture de bande de roulement ; l'insertion de la carcasse dans le moule, à l'état monté sur le tambour de confection de carcasse, avant de refermer le moule ; la mise du moule sous pression via le tambour de confection de carcasse et l'élargissement de la carcasse jusqu'à la surface interne de la ceinture de bande de roulement pour former un assemblage de bandage pneumatique ; la vulcanisation de l'assemblage de bandage pneumatique ; et le retrait du moule de l'assemblage de bandage pneumatique vulcanisé.

6. Procédé selon la revendication 5, dans lequel l'étape de formation de la carcasse comprend en outre le fait de placer des composants de carcasse sur le tambour de confection de carcasse à plusieurs postes de travail à des endroits prédéterminés le long d'un axe de travail s'étendant à travers lesdits plusieurs postes de travail, la circonférence du tambour de confection de carcasse se déplaçant perpendiculairement aux postes de travail.

7. Procédé selon la revendication 1, pour lequel le moule de vulcanisation avec la carcasse (4) et la ceinture de bande de roulement (3) est transféré dans une boucle de vulcanisation par moule (100) qui permet de cuire les bandages pneumatiques (200), de les vulcaniser et de les renvoyer pour être retirés du moule de vulcanisation.
